# FASCICULE DE BREVET EUROPEEN

(11) **EP 3 602 741 B1**
(45) Date de publication et mention de la délivrance du brevet: **28.04.2021**
(21) Numéro de dépôt: 18714559.4
(22) Date de dépôt: 20.03.2018
(51) Int. Cl.: H02K 1/27, H01F 7/02, H02K 21/12

(54) **ROTOR POUR MOTEUR OU GÉNÉRATEUR ÉLECTROMAGNÉTIQUE À FLUX RADIAL COMPORTANT UN MAILLAGE LOGEANT DES AIMANTS UNITAIRES**
ROTOR FÜR EINEN MOTOR ODER ELEKTROMAGNETISCHEN RADIALFLUSSMOTOR MIT EINEM NETZGEHÄUSE AUS EINZELNEN MAGNETEN
ROTOR FOR A MOTOR OR RADIAL FLUX ELECTROMAGNETIC GENERATOR COMPRISING A MESH HOUSING SINGLE MAGNETS

(30) Priorité: 22.03.2017 FR 1700295; 18.09.2017 FR 1700936
(43) Date de publication de la demande: 05.02.2020
(73) Titulaire: Whylot SAS, 46100 Cambes (FR)
(72) Inventeur: RAVAUD, Romain, F-46240 Coeur de Causse (FR); MAYEUR, Loic, 12700 Saint Santin (FR)
(86) Numéro de dépôt international: PCT/FR2018/000063
(87) Numéro de publication internationale: WO 2018/172634

(56) Documents cités:
- EP-A1- 0 996 212
- EP-A1- 1 780 878
- EP-A1- 2 773 023
- FR-A- 1 475 501
- FR-A1- 2 996 378
- JP-A- 2015 202 514

## Description

La présente invention concerne un rotor pour moteur ou génératrice électromagnétique à flux radial à structure alvéolaire. L'invention concerne aussi un moteur ou une génératrice électromagnétique à flux radial équipé d'un tel rotor.

La présente invention trouve une application avantageuse mais non limitative pour un moteur électromagnétique délivrant une forte puissance avec une vitesse de rotation du rotor élevée, ce qui est obtenu par les caractéristiques spécifiques du rotor selon la présente invention. Un tel moteur peut être utilisé par exemple comme moteur électromagnétique dans un véhicule automobile totalement électrique ou hybride.

Avantageusement mais non limitativement, le moteur ou la génératrice électromagnétique à flux radial peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement du moteur radial pour un rendement optimal, mais également une très bonne tenue mécanique de la partie tournante, c'est-à-dire le rotor, afin d'améliorer la fiabilité du système.

Dans des applications à haute vitesse, il est nécessaire de réduire les pertes pour un rendement optimal. Dans des applications automobiles, la miniaturisation est de plus en plus recherchée. Pour cela, il est important d'avoir un système compact rendu possible par la réduction de la masse et de l'encombrement du moteur radial, mais également une très bonne tenue mécanique de la partie tournante, afin d'améliorer la fiabilité du système.

Pour une machine électromagnétique à flux radial, le rotor comporte un corps cylindrique dont tout le pourtour porte des aimants.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux radial pour une machine à flux radial.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Le document US-A-2011/0285237 divulgue un moteur à entrefer axial. Le but de ce document est une simplification des étapes de fabrication du rotor tout en empêchant les aimants permanents portés par ce rotor d'être déplacés ou desserrés lors du montage et du fonctionnement du rotor. Les aimants sont logés dans une structure monopièce faite d'une pièce moulée enserrant les aimants.

La pièce moulée présente des rainures séparant les aimants dans lesquelles sont introduites des nervures portées par un corps du rotor, permettant de bloquer la pièce moulée contre un mouvement de déplacement axial. Un maintien radial de la pièce moulée est effectué par des éléments concentriques interne et externe à la pièce moulée.

Ce document se destine donc à des aimants logés dans une pièce moulée et n'est d'aucun enseignement pour les aimants se trouvant séparés les uns des autres. De plus, les nervures ne maintiennent les aimants que par leur action sur la pièce moulée et n'agissent donc pas directement pour le maintien des aimants dans le rotor. De ce plus, ce document concerne un moteur à flux axial et non radial avec une problématique différente.

Le document EP-A-1 780 878 décrit un rotor d'un moteur ou d'un générateur électromagnétique à flux radial présentant au moins un support cylindrique logeant une pluralité d'aimants. Ledit au moins un support comporte un maillage cylindrique présentant des mailles délimitant chacune un logement pour un aimant unitaire respectif, chaque logement présentant des dimensions internes justes suffisantes pour permettre une introduction d'un aimant unitaire en son intérieur.

Ce document ne divulgue aucun moyen de maintien dans les mailles des aimants unitaires ni aucun moyen de maintien de solidification du rotor. Un tel rotor n'est donc pas adapté à tourner à des vitesses de rotation très élevées.

Le document JP-A-2015 2025514 reprend sensiblement la divulgation du document EP-A-1 780 878 sans toutefois divulguer ou suggérer des caractéristiques qui pourraient rendre le rotor apte à tourner à des vitesses de rotation très élevées.

Le document FR-A-2 996 378 décrit une structure d'aimant comprenant des aimants unitaires. Ces aimants unitaires sont collés par de la résine sans interposition d'un quelconque élément de maintien entre les aimants unitaires. En fait le collage remplace le maillage décrit dans JP-A-2015 2025514 et EP-A-1 780 878 et ne vient pas en complément. Une telle disposition ne pourrait pas supporter des vitesses élevées de rotation sans perte des aimants lors de la rotation.

Le document EP-A-2 773 023 décrit un rotor composite pour un moteur à flux axial, le rotor comprenant un moyen de maintien pour une pluralité d'aimants permanents espacés de manière circonférentielle autour du rotor. Il est prévu un enroulement de recouvrement composé de brins de matériau de renforcement enroulés de manière toroïdale sur ledit moyen de maintien et lesdits aimants. Les brins aident à renforcer le rotor.

Cependant cet enroulement de recouvrement n'est pas appliqué sur chaque aimant individuellement mais sur tous les aimants et le moyen de maintien en formant un tout, les aimants étant de gros aimants en trois dimensions. Le problème à la base de la présente invention est de concevoir un rotor pour un moteur ou un générateur à flux radial qui puisse maintenir le ou les aimants permanents qu'il supporte de manière efficace en évitant aux aimants de se détacher du rotor.

A cet effet la présente invention concerne un rotor d'un moteur ou d'un générateur électromagnétique à flux radial présentant au moins un support cylindrique logeant une pluralité d'aimants unitaires, ledit au moins un support comportant un maillage cylindrique présentant des mailles délimitant chacune un logement pour un aimant unitaire respectif, chaque logement présentant des dimensions internes justes suffisantes pour permettre une introduction d'un aimant unitaire en son intérieur, caractérisé en ce qu'un espace est laissé entre le logement et l'aimant unitaire en étant rempli par une résine renforcée de fibres, le maillage étant en matériau isolant renforcé de fibres, le rotor comportant une couche de composite non conductrice enrobant les aimants unitaires et le maillage.

Le but de la présente invention est de décomposer un ou des aimants dans un rotor selon l'état de la technique en une pluralité de petits ou micro-aimants. Un aimant de dimensions importantes est sujet à des pertes par courants de Foucault plus importantes que son équivalent en petits ou micro-aimants. L'utilisation de petits aimants ou de micro-aimants permet donc de réduire ces pertes qui sont préjudiciables au fonctionnement du rotor.

Le rotor à aimants placés dans des alvéoles ou logements de la présente invention est conçu de façon à réduire les pertes dans le rotor avec des moyens de solidarisation permettant de maintenir les aimants et de pallier à l'effet de la force axiale ou radiale et de la force centrifuge à très haute vitesse.

La fissuration d'un aimant relativement important est souvent la raison d'un dysfonctionnement d'un actionneur électromagnétique. La présente invention entend éviter ce dommage par la présence d'une pluralité d'aimants unitaires plus petits que l'aimant qu'ils remplacent.

Se pose alors le problème de décollement d'un aimant unitaire de son logement. Ceci est résolu du fait du mode de collage proposé par la présente invention. Le logement est calculé au plus juste pour bien maintenir l'aimant unitaire qu'il reçoit en ne laissant entre eux que la place suffisante pour l'injection de résine. La résine est elle-même renforcée de fibres pour avoir des caractéristiques de tenue mécanique renforcée.

Avantageusement, ledit au moins un maillage est sous forme d'un nid d'abeille présentant des logements de section hexagonale.

Un maillage en nid d'abeille est connu pour renforcer la résistance d'un élément, dans le cas présent un rotor. Les aimants unitaires sont insérés dans des logements hexagonaux qui assurent leur maintien. Les parois des logements servent d'isolant électrique et la densité des logements dans la structure d'aimant peut être considérablement augmentée. Le maillage en nid d'abeille est en matériau composite isolant renforcé de fibres.

Le composite d'enrobage de la structure d'aimant est préféré au fer pour ne pas induire de couple de détente. De plus, sa résistance mécanique peut être élevée et l'enrobage peut se faire aisément notamment par injection du composite sur une disposition d'aimants unitaires maintenus en place les uns par rapport aux autres par un moyen quelconque. Une structure d'aimant ainsi protégée par son enrobage est résistante à des vitesses de rotation élevées et les aimants unitaires sont fermement maintenus en place en étant déjà dans un maillage et collés par une couche de résine.

Avantageusement, chaque aimant unitaire est sous la forme d'un plot allongé pénétrant en longueur dans son logement associé s'étendant selon l'épaisseur du maillage, le plot allongé étant cylindrique ou sous forme d'un polyèdre avec au moins une face longitudinale plane et, quand ledit au moins un maillage est sous forme d'un nid d'abeille, chaque plot présente une face longitudinale de forme hexagonale.

Le plot allongé traverse donc le rotor au moins partiellement, avantageusement de part en part, en faisant ou en ne faisant pas saillie sur au moins la circonférence interne ou externe du rotor qui va être en vis-à-vis des bobines d'un stator pour un actionneur électrique tournant et de laquelle part le champ magnétique.

Selon sa définition la plus classique, un polyèdre est une forme géométrique à trois dimensions ayant des faces planes polygonales qui se rencontrent selon des segments de droite qu'on appelle arêtes, par exemple un prisme droit ou oblique, un cube ou une pyramide. Dans le cadre de la présente invention, Il est préféré avoir un polyèdre présentant deux surfaces polygonales longitudinales opposées, planes et égales reliées par des arrêtes droites et parallèles tel un polyèdre hexagonal mais ceci n'est pas limitatif, une seule surface longitudinale pouvant être présente, un sommet étant porté par l'autre extrémité du polyèdre.

Ceci permet d'avoir un rotor présentant de nombreux plots formant des aimants unitaires. Il s'est révélé qu'un rotor avec une telle pluralité d'aimants unitaires avait un grand pouvoir d'aimantation tout en présentant une grande résistance, le rotor présentant une couche de préférence en composite pour l'enrobage des aimants unitaires.

Il est connu que, pour obtenir un champ magnétique d'intensité optimale, le volume idéal d'un aimant doit s'approcher d'un cube ou d'un cylindre dont la longueur est égale au diamètre. Il est de connaissance courante qu'augmenter la longueur d'un aimant au-delà n'apporte aucune augmentation du champ magnétique. La démarche de la présente invention va cependant dans le sens contraire de ce préjugé.

La longueur d'un aimant unitaire est sensiblement augmentée par rapport au diamètre ou à une diagonale de sa face longitudinale plane que ne le propose la pratique largement répandue pour répondre à des besoins de résistance mécanique du rotor.

Selon l'invention, il a été découvert qu'une pluralité d'aimants unitaires dans un rotor sont plus résistants qu'un unique aimant tout en augmentant, de manière surprenante, le champ magnétique délivré par le rotor.

Avantageusement, un rapport d'une surface de la face longitudinale du plot sur la surface d'une face du maillage d'où débouchent les logements est inférieur à 2%.

Ceci permet d'avoir un nombre très élevé de plots sur un côté du rotor, la place prise par un plot comme aimant unitaire sur la surface de travail du rotor étant très réduite.

Selon l'invention, le maillage est dans un matériau non conducteur de l'électricité.

Un matériau non conducteur de l'électricité est préféré au fer pour ne pas induire de couple de détente. Un composite est préféré, sa résistance mécanique étant élevée et la fabrication du maillage pouvant se faire aisément, notamment par injection du composite. Des fibres de renforcement dans le maillage concourent à augmenter la résistance du rotor et notamment la rigidité à la flexion et au flambement.

Avantageusement, le maillage présente un axe longitudinal confondu avec l'axe de rotation du rotor, chaque plot s'étendant radialement à l'axe longitudinal du maillage.

Avantageusement, la couche de composite comprend des fibres de renforcement comme des fibres de verre ou des fibres en matière plastique.

Avantageusement, un matériau monocouche ou multicouches est introduit dans un espace entre le maillage et l'aimant unitaire. Ce matériau peut être un plastique, un composite un matériau métallique d'enrobage des aimants unitaires comme du nickel ou du cuivre. Le matériau peut avoir été déposé sur l'aimant unitaire préalablement à son introduction dans le maillage en étant par exemple un matériau de revêtement ou peut avoir une action de solidarisation de l'aimant unitaire avec la maille qui le reçoit.

L'invention concerne aussi un moteur ou générateur électromagnétique à flux radial, caractérisé en ce qu'il comprend au moins un tel rotor et au moins un stator.

Avantageusement, le moteur ou générateur électromagnétique comprend au moins un rotor associé à deux stators.

L'invention concerne enfin un procédé de fabrication d'un tel rotor, caractérisé en ce qu'il comprend les étapes suivantes :
- positionnement et maintien d'aimants unitaires à distance les uns des autres par introduction de chaque aimant unitaire dans un logement respectif associé d'un maillage cylindrique, en laissant un espace entre ledit logement et ledit aimant unitaire,
- collage de chaque aimant unitaire par introduction d'une résine renforcée de fibres dans l'espace autour de l'aimant unitaire dans chaque logement,
- injection d'une couche de composite non conductrice autour du maillage et des aimants unitaires pour leur enrobage.

Les aimants unitaires peuvent avoir été préalablement découpés dans une tuile selon trois dimensions et notamment en largeur et en longueur de la tuile. Il s'est avéré que les aimants unitaires avaient des propriétés magnétiques améliorées par rapport aux propriétés d'une portion comparable de la tuile magnétique.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un maillage formant un rotor à flux radial selon la présente invention, quelques aimants unitaires étant montrés insérés dans le maillage,
- la figure 2 est une représentation schématique d'une vue agrandie de la partie cerclée référencée A à la figure 1 montrant en plus des aimants unitaires complètement insérés dans le maillage, en cours d'insertion et non encore insérés,
- la figure 3 est une représentation schématique d'une vue en éclaté d'un mode de réalisation selon la présente invention d'un moteur électromagnétique à flux radial.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Le but de la présente invention est de remplacer un ou plusieurs aimants de taille importante par une pluralité de petits aimants unitaires 4. Il y a donc une création de flux magnétique par une multitude de petits aimants unitaires 4 dont le nombre peut être d'au moins 20 et peut même dépasser 100 par rotor.

Un rotor de l'état de la technique pouvait comprendre de 1 à 5 aimants alors que la présente invention prévoit beaucoup plus d'aimants unitaires de petite taille. Les aimants unitaires 4 selon la présente invention peuvent être insérés dans des alvéoles 5 respectives par un robot. Pour un rotor de taille moyenne, les petits aimants 4 dans le cadre de la présente invention peuvent avoir une dimension de 4 mm.

En se référant à toutes les figures, la présente invention concerne un rotor d'un moteur ou d'un générateur électromagnétique à flux radial présentant au moins un support cylindrique logeant une pluralité d'aimants.

Selon l'invention, ledit au moins un support 2a comporte un maillage 5a cylindrique présentant des mailles délimitant chacune un logement 5 pour un aimant unitaire 4 respectif. Chaque logement 5 présente des dimensions internes justes suffisantes pour permettre une introduction d'un aimant unitaire 4 en son intérieur tout en laissant un espace entre le logement et l'aimant unitaire 4 rempli par une résine renforcée de fibres, le maillage 5a et en particulier les mailles étant en matériau isolant renforcé de fibres.

Pour former un ensemble résistant, le rotor 1, 1a comporte une couche de composite non conductrice enrobant les aimants unitaires 4 et le maillage 5a. La couche de composite peut comprendre des fibres de renforcement comme des fibres de verre ou des fibres en matière plastique, par exemple en kevlar ou en polyamide ou toute matière plastique augmentant la résistance mécanique de l'ensemble.

Ceci permet d'assurer le maintien des aimants unitaires 4 dans leur logement 5 respectif même par vitesse de déplacement élevée, par exemple une vitesse de rotation élevée pour le rotor 1, 1a, ce qui n'est pas limitatif.

Le maillage 5a peut être sous forme d'un nid d'abeille présentant des logements 5 de section hexagonale. Dans ce cas, chaque aimant unitaire peut être sous la forme d'un plot 4 allongé pénétrant en longueur dans son logement 5 associé s'étendant selon l'épaisseur du maillage 5a.

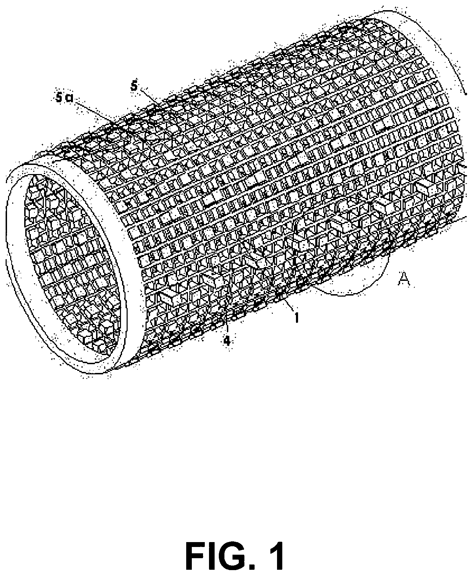

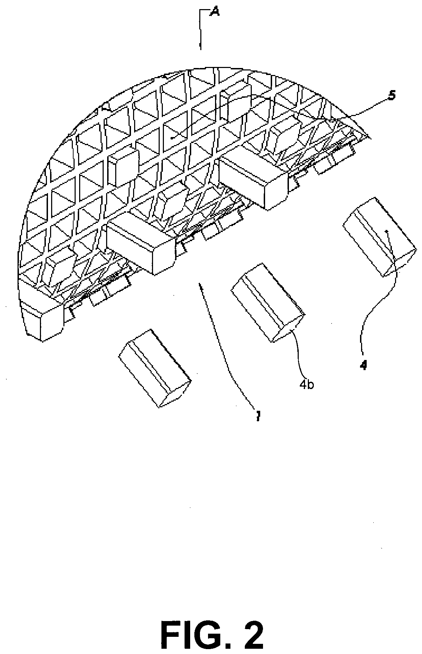

Aux figures 1 et 2, seuls quelques aimants unitaires 4 sont montrés insérés dans les logements 5 du maillage 5a mais dans le cadre de l'invention, chaque maille définit un logement 5 pour la réception d'un aimant unitaire 4 respectif.

A la figure 2, des aimants unitaires 4 sont montrés respectivement insérés, en cours d'insertions et espacés du maillage 5a. Une face longitudinale d'un seul aimant unitaire est référencée 4b mais ce qui est énoncé pour cette face longitudinale référencée est valable pour toutes les faces longitudinales des aimants unitaires 4.

Selon une caractéristique préférentielle de l'invention, chaque aimant unitaire 4 peut être sous la forme d'un plot 4 allongé, visible notamment aux figures 1 et 2, en présentant une longueur traversant radialement le maillage 5a cylindrique. Le plot 4 allongé peut être cylindrique ou sous la forme d'un polyèdre avec au moins une face longitudinale plane orientée vers une surface de travail du rotor qui est la surface en vis à vis des bobinages d'un stator dans un moteur électromagnétique.

Quand le maillage 5a est sous forme d'un nid d'abeille, chaque plot 4 peut présenter une face longitudinale 4b de forme hexagonale. Une face carrée est aussi possible. C'est cette forme non limitative et non particulièrement préférée qui est illustrée aux figures 1 et 2.

Par exemple, sans que cela soit limitatif, les aimants unitaires 4 peuvent être des aimants néodyme fer bore ou samarium cobalt ou tout autre type d'aimants. Les aimants en néodyme sont sensibles aux chocs et à la torsion et peuvent facilement s'enflammer. En diminuant leurs dimensions par division, la présente invention permet d'éviter tous ces risques et notamment les risques de casse des aimants. Leur maintien dans des alvéoles ou logements 5 les protège aussi.

Un rapport d'une surface de la face longitudinale 4b du plot 4 sur la surface d'une face du maillage 5a d'où débouchent les logements 5 peut être inférieur à 2%. Ceci qui montre qu'un aimant unitaire 4 tient très peu de place sur la surface de travail totale du maillage 5a. Ceci permet d'avoir un nombre très élevé de plots 4 sur le maillage 5a.

Le maillage 5a est dans un matériau non conducteur de l'électricité, ce qui diminue le couple de détente. Le maillage 5a peut être en Nomex® en fibres synthétiques hautes performances en meta-aramide, en résine ou dans d'autres fibres plastiques.

Le maillage 5a peut présenter un axe longitudinal confondu avec l'axe de rotation du rotor 1, 1a, chaque plot 4 s'étendant radialement à l'axe longitudinal du maillage 5.

Ainsi, dans le cadre d'une réalisation préférentielle de l'invention, la couche d'enrobage en composite, le maillage 5a entourant les aimants unitaires 4 et les moyens de collage des aimants dans les logements 5 du maillage 5a peuvent être tous les trois renforcés par des fibres. Le rotor 1, 1a ainsi obtenue présente des caractéristiques mécaniques de résistance à la rupture très élevées.

L'invention concerne aussi un moteur ou générateur électromagnétique à flux radial. Ce moteur ou ce générateur comprend au moins un rotor tel que précédemment décrit et au moins un stator.

Dans un mode de réalisation préféré, le moteur ou le générateur électromagnétique comporte deux stators et un rotor, le rotor de forme cylindrique présentant un support cylindrique présentant des branches de séparation s'étendant axialement sur le support cylindrique, les branches de séparation délimitant axialement des structures d'aimant composées du maillage et des aimants unitaires.

Avantageusement, une frette recouvre une extrémité du rotor à proximité du support cylindrique, un cylindre de recouvrement intérieur étant inséré à l'intérieur du support cylindrique et un cylindre de recouvrement extérieur étant inséré à l'extérieur du support cylindrique sur la périphérie externe du support cylindrique.

Avantageusement, un premier stator est disposé à l'intérieur du rotor en présentant un circuit magnétique interne portant des bobines, le recouvrement intérieur recouvrant le circuit magnétique interne et un deuxième stator est disposé à l'extérieur du rotor en l'entourant en présentant un circuit magnétique externe intégrant en son intérieur des bobines, le recouvrement extérieur étant disposé entre les bobines et le circuit magnétique externe.

L'invention concerne enfin un procédé de fabrication d'un tel rotor. La première étape du procédé de fabrication est le positionnement et le maintien d'aimants unitaires 4 à distance les uns des autres par introduction de chaque aimant unitaire dans un logement 5 respectif associé d'un maillage 5a cylindrique.

La deuxième étape est le collage de chaque aimant unitaire 4 par introduction d'une résine autour de l'aimant unitaire 4 dans chaque logement 5. La troisième étape est l'injection d'une couche de composite autour du maillage 5 et des aimants unitaires 4 pour leur enrobage.

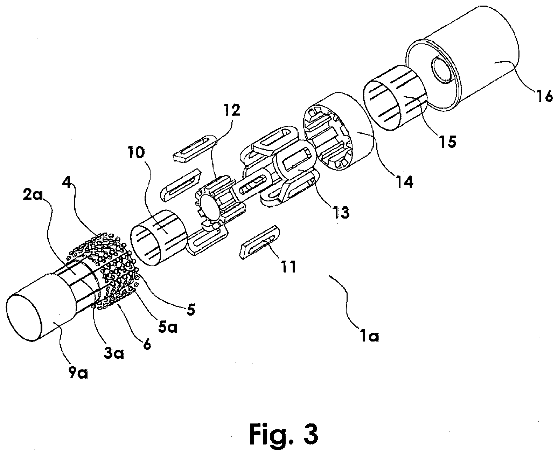

Dans le mode de réalisation montré à la figure 3, qui montre un actionneur électromagnétique à flux radial avec deux stators et un rotor 1a, le rotor 1a à flux radial de forme cylindrique présente un support cylindrique 2a pouvant présenter des branches de séparation 3a qui peuvent s'étendre axialement sur le support cylindrique 2a. Ceci n'est pas limitatif.

Les branches de séparation 3a délimitent axialement des structures d'aimant 6 composées du maillage 5a et des aimants unitaires 4. Il se peut que le support cylindrique 2a soit creusé entre les branches de séparation 3a pour recevoir les aimants 4 logés dans le maillage 5a en formant une structure d'aimant 6 composée du maillage alvéolaire 5a avec ses logements 5 et des aimants unitaires 4.

Une frette 9a recouvre une extrémité du rotor 1a à proximité du support cylindrique 2a. A l'intérieur du support cylindrique 2a est inséré un cylindre de recouvrement intérieur 10 et à l'extérieur du support cylindrique 2a sur la périphérie externe du support cylindrique 2a s'étend un cylindre de recouvrement extérieur 15.

Un premier stator est disposé à l'intérieur du rotor 1a en présentant un circuit magnétique interne 12 portant des bobines 11. Le recouvrement intérieur 10 recouvre le circuit magnétique interne 12.

Un deuxième stator est disposé à l'extérieur du rotor 1a en l'entourant en présentant un circuit magnétique externe 14 intégrant en son intérieur des bobines 13. Le recouvrement extérieur 15 est disposé entre les bobines 13 et le circuit magnétique externe 14. Un carter 16 recouvre l'ensemble du rotor 1a et des deux stators.

Dans un autre mode de réalisation non montré à la figure 3, les branches peuvent être sous forme de couronnes se suivant espacées en direction axiale du support cylindrique. Les branches successives peuvent faire saillie radialement à la périphérie dudit au moins un support. Ledit au moins un support cylindrique peut être creusé pour présenter entre deux branches successives un logement pour la réception d'une unité composée de la structure alvéolaire et des aimants.

Les structures d'aimant 6 composées du maillage 5a et des aimants unitaires 4 utilisées pour un support cylindrique peuvent être chacune sous forme d'un anneau fermé ou de pavés disposés à distance les uns des autres Sinon l'aménagement de stators et de possibles cylindres de recouvrement ou frette d'extrémité dans l'actionneur à flux radial selon cet autre mode peut être similaire à celui montré à la figure 3. Cet autre mode de réalisation n'est pas préféré. L'actionneur à flux radial peut aussi être dénommé moteur ou générateur à flux radial.

Ce qui va suivre peut être valable pour les deux modes de réalisation préférentielle de la présente invention.

Les structures d'aimant 6 composées chacune du maillage 5a et des aimants unitaires 4 peuvent être solidarisés audit au moins un support 2a par des moyens de solidarisation à base de matériaux ferreux, de matériaux synthétiques ou composites.

Les moyens de solidarisation peuvent faire partie intégrante du rotor et/ou peuvent être des pièces rapportées solidaires du rotor. Les pièces rapportées peuvent être soudées, vissées, rivetées ou encliquetées avec le rotor 1, 1a. Il est possible de prévoir des moyens de solidarisation entre chaque aimant unitaire 4 et le logement ou alvéole 5 le recevant, ceci sur la face interne au logement ou alvéole 5 des parois de séparation 19 qui la délimite par rapport à des logements ou alvéoles 5 adjacents.

Dans chaque structure d'aimant 6 composée du maillage alvéolaire 5a et des aimants unitaires 4, les logements ou alvéoles 5 peuvent être délimitées par des parois de séparation 19, chaque aimant unitaire 4 étant solidarisé dans son logement ou alvéole 5 respective par de la résine.

Les aimants unitaires 4 et leurs logements ou alvéoles 5 respectives peuvent être de forme variable avec leurs pôles orientés dans des directions parallèles ou divergentes. Par exemple, les dimensions des logements ou alvéoles 5 peuvent différer d'un logement ou alvéole 5 à une autre. Les logements ou alvéoles 5 peuvent ne pas être obligatoirement de forme hexagonale bien que cela soit préféré.

Le moteur ou générateur électromagnétique peut comprendre au moins un stator portant au moins un bobinage en comprenant un ou plusieurs entrefers entre ledit au moins un rotor et ledit au moins un stator, d'un ou plusieurs stators portant le bobinage.

Chaque stator peut comporter un circuit magnétique associé à un bobinage. Le stator peut présenter des dents ou des encoches ouvertes ou fermées. Une carcasse permet de protéger le moteur ou la génératrice électromagnétique en tant qu'actionneur. Les stators peuvent être connectés en série ou en parallèle. Le décalage d'un stator d'un angle l'un par rapport à l'autre, combiné à la forme des encoches et à la forme des aimants unitaires 4, permet de réduire la variation de couple et le couple de détente.

L'actionneur pouvant être un moteur ou un générateur électromagnétique peut fonctionner à des vitesses très élevées avec ou sans multiplicateur de vitesses. Le moteur ou la génératrice peut comprendre au moins deux stators connectés en série ou en parallèle ou au moins deux rotors.

Le rotor peut comprendre un arbre de rotation s'étendant perpendiculairement aux faces circulaires du rotor 1, 1a en traversant les deux stators. Le rotor 1, 1a peut être porté par au moins deux roulements, avec un roulement associé à un stator respectif pour permettre sa rotation par rapport aux stators.

## Revendications

1. Rotor (1, 1a) d'un moteur ou d'un générateur électromagnétique à flux radial présentant au moins un support cylindrique (2a) logeant une pluralité d'aimants unitaires (4), ledit au moins un support (2a) comportant un maillage (5a) cylindrique présentant des mailles délimitant chacune un logement (5) pour un aimant unitaire (4) respectif, ledit maillage (5a) étant en matériau isolant renforcé de fibres, chaque logement (5) présentant des dimensions internes justes suffisantes pour permettre une introduction d'un aimant unitaire (4) en son intérieur, **caractérisé en ce qu'**un espace est laissé entre le logement (5) et l'aimant unitaire (4) en étant rempli par une résine renforcée de fibres, le rotor comportant une couche de composite non conductrice enrobant les aimants unitaires (4) et le maillage (5a).

2. Rotor (1, 1a) selon la revendication précédente, dans lequel ledit au moins un maillage (5a) est sous forme d'un nid d'abeille présentant des logements (5) de section hexagonale.

3. Rotor (1, 1a) selon l'une quelconque des deux revendications précédentes, dans lequel chaque aimant unitaire est sous la forme d'un plot (4) allongé pénétrant en longueur dans son logement (5) associé s'étendant selon l'épaisseur du maillage (5a), le plot (4) allongé étant cylindrique ou sous forme d'un polyèdre avec au moins une face longitudinale (4b) plane et, quand ledit au moins un maillage (5a) est sous forme d'un nid d'abeille, chaque plot (4) présente une face longitudinale (4b) de forme hexagonale.

4. Rotor (1, 1a) selon l'une quelconque des revendications précédentes, dans lequel un rapport d'une surface de la face longitudinale (4b) du plot (4) sur la surface d'une face du maillage (5a) d'où débouchent les logements (5) est inférieur à 2%.

5. Rotor (1, 1a) selon l'une quelconque des revendications précédentes, dans lequel le maillage (5a) présente un axe longitudinal confondu avec l'axe de rotation du rotor (1, 1a), chaque plot (4) s'étendant radialement à l'axe longitudinal du maillage (5a).

6. Rotor (1, 1a) selon la revendication précédente, dans lequel la couche de composite comprend des fibres de renforcement comme des fibres de verre ou des fibres en matière plastique.

7. Rotor (1, 1a) selon la revendication précédente, dans lequel un matériau monocouche ou multicouches est introduit dans un espace entre le maillage (5a) et l'aimant unitaire (4).

8. Moteur ou générateur électromagnétique à flux radial, **caractérisé en ce qu'**il comprend au moins un rotor (1, 1a) selon l'une quelconque des revendications précédentes et au moins un stator.

9. Moteur ou générateur électromagnétique selon la revendication précédente, lequel comporte deux stators et un rotor (1a), le rotor (1a) de forme cylindrique présentant un support cylindrique (2a) présentant des branches de séparation (3a) s'étendant axialement sur le support cylindrique (2a), les branches de séparation (3a) délimitant axialement des structures d'aimant (6) composées du maillage (5a) et des aimants unitaires (4).

10. Moteur ou générateur électromagnétique selon l'une quelconque des deux revendications précédentes, dans lequel une frette (9a) recouvre une extrémité du rotor (1a) à proximité du support cylindrique (2a), un cylindre de recouvrement intérieur (10) étant inséré à l'intérieur du support cylindrique (2a) et un cylindre de recouvrement extérieur (15) étant inséré à l'extérieur du support cylindrique (2a) sur la périphérie externe du support cylindrique (2a).

11. Moteur ou générateur électromagnétique selon la revendication précédente, dans lequel un premier stator est disposé à l'intérieur du rotor (1a) en présentant un circuit magnétique interne (12) portant des bobines (11), le recouvrement intérieur (10) recouvrant le circuit magnétique interne (12) et un deuxième stator est disposé à l'extérieur du rotor (1a) en l'entourant en présentant un circuit magnétique externe (14) intégrant en son intérieur des bobines (13), le recouvrement extérieur (15) étant disposé entre les bobines (13) et le circuit magnétique externe (14).

12. Procédé de fabrication d'un rotor (1, 1a) selon l'une quelconque des revendications 1 à 7, **caractérisé en ce qu'**il comprend les étapes suivantes :
- positionnement et maintien d'aimants unitaires (4) à distance les uns des autres par introduction de chaque aimant unitaire (4) dans un logement (5) respectif associé d'un maillage (5a) cylindrique, en laissant un espace entre ledit logement (5) et ledit aimant unitaire (4),
- collage de chaque aimant unitaire (4) par introduction d'une résine renforcée de fibres dans l'espace autour de l'aimant unitaire (4) dans chaque logement (5),
- injection d'une couche de composite non conductrice autour du maillage (5a) et des aimants unitaires (4) pour leur enrobage.

## Patentansprüche

1. Rotor (1, 1a) eines Motors oder eines elektromagnetischen Radialflussgenerators, aufweisend mindestens einen zylindrischen Halter (2a), der eine Vielzahl einzelner Magnete (4) aufnimmt, wobei der mindestens eine Halter (2a) ein zylindrisches Netzgehäuse (5a) aufweist, das Maschen aufweist, von denen jede eine Aufnahme (5) für einen jeweiligen einzelnen Magnet (4) begrenzt, wobei das Netzgehäuse (5a) aus faserverstärktem Isolationsmaterial ist, wobei jede Aufnahme (5) innere Abmessungen aufweist, die genau ausreichend sind, um ein Einsetzen eines einzelnen Magnets (4) in ihr Inneres zu gestatten, **dadurch gekennzeichnet, dass** ein Platz zwischen der Aufnahme (5) und dem einzelnen Magnet (4) gelassen ist, der mit einem faserverstärkten Harz gefüllt ist, wobei der Rotor eine nichtleitende Kompositschicht aufweist, die die einzelnen Magnete (4) und das Netzgehäuse (5a) umhüllt.

2. Rotor (1, 1a) nach vorangehendem Anspruch, wobei das mindestens eine Netzgehäuse (5a) in Form einer Bienenwabe ist, die Aufnahmen (5) mit sechseckigem Querschnitt aufweist.

3. Rotor (1, 1a) nach einem der zwei vorangehenden Ansprüche, wobei jeder einzelne Magnet in Form eines länglichen Stifts (4) vorliegt, der in der Länge in seine zugeordnete Aufnahme (5) eindringt, die sich gemäß der Dicke des Netzgehäuses (5a) erstreckt, wobei der längliche Stift (4) zylindrisch oder in Form eines Vielkants mit mindestens einer ebenen Längsfläche (4b) ist und, wenn das mindestens eine Netzgehäuse (5a) bienenwabenförmig ist, jeder Stift (4) eine sechseckige Längsfläche (4b) aufweist.

4. Rotor (1, 1a) nach einem der vorangehenden Ansprüche, wobei ein Verhältnis einer Oberfläche der Längsfläche (4b) des Stifts (4) zu der Oberfläche einer Fläche des Netzgehäuses (5a), von wo die Aufnahmen (5) ausmünden, kleiner als 2 % ist.

5. Rotor (1, 1a) nach einem der vorangehenden Ansprüche, wobei das Netzgehäuse (5a) eine Längsachse aufweist, die mit der Rotationsachse des Rotors (1, 1a) zusammenfällt, wobei sich jeder Stift (4) radial zur Längsachse des Netzgehäuses (5a) erstreckt.

6. Rotor (1, 1a) nach vorangehendem Anspruch, wobei die Kompositschicht Verstärkungsfasern wie Glasfasern oder Kunststofffasern umfasst.

7. Rotor (1, 1a) nach vorangehendem Anspruch, wobei ein einschichtiges oder mehrschichtiges Material in einen Platz zwischen dem Netzgehäuse (5a) und dem einzelnen Magnet (4) eingesetzt ist.

8. Motor oder elektromagnetischer Radialflussgenerator, **dadurch gekennzeichnet, dass** er mindestens einen Rotor (1, 1a) nach einem der vorangehenden Ansprüche und mindestens einen Stator umfasst.

9. Motor oder elektromagnetischer Generator nach vorangehendem Anspruch, der zwei Statoren und einen Rotor (1a) aufweist, wobei der zylindrische Rotor (1a) einen zylindrischen Halter (2a) aufweist, der trennende Schenkel (3a) aufweist, die sich axial auf dem zylindrischen Halter (2a) erstrecken, wobei die trennenden Schenkel (3a) Magnetstrukturen (6) axial begrenzen, die aus dem Netzgehäuse (5a) und einzelnen Magneten (4) zusammengesetzt sind.

10. Motor oder elektromagnetischer Generator nach einem der zwei vorangehenden Ansprüche, wobei ein Mantelring (9a) ein Ende des Rotors (1a) in der Nähe des zylindrischen Halters (2a) bedeckt, wobei ein innerer Abdeckzylinder (10) in das Innere des zylindrischen Halters (2a) eingesetzt ist und ein äußerer Abdeckzylinder (15) außerhalb des zylindrischen Halters (2a) auf dem äußeren Umfang des zylindrischen Halters (2a) eingesetzt ist.

11. Motor oder elektromagnetischer Generator nach vorangehendem Anspruch, wobei ein erster Stator im Inneren des Rotors (1a) angeordnet ist, indem er einen inneren Magnetkreis (12) aufweist, der Spulen (11) trägt, wobei die innere Abdeckung (10) den inneren Magnetkreis abdeckt (12) und ein zweiter Stator außerhalb des Rotors (1a) angeordnet ist, indem er ihn umgibt, indem er einen äußeren Magnetkreis (14) aufweist, der in seinem Inneren Spulen (13) integriert, wobei die äußere Abdeckung (15) zwischen den Spulen (13) und dem äußeren Magnetkreis (14) angeordnet ist.

12. Verfahren zur Herstellung eines Rotors (1, 1a) nach einem der Ansprüche 1 bis 7, **dadurch gekennzeichnet, dass** es die folgenden Schritte umfasst:
- voneinander beabstandetes Positionieren und Halten einzelner Magnete (4) durch Einsetzen jedes einzelnen Magnets (4) in eine jeweilige Aufnahme (5), die einem zylindrischen Netzgehäuse (5a) zugeordnet ist, mit einem Platz zwischen der Aufnahme (5) und dem einzelnen Magnet (4),
- Verkleben jedes einzelnen Magnets (4) durch Einleiten eines faserverstärkten Harzes in den Platz um den einzelnen Magnet (4) in jeder Aufnahme (5),
- Einspritzen einer nichtleitenden Kompositschicht um das Netzgehäuse (5a) und einzelne Magnete (4) für deren Umhüllung.

## Claims

1. Rotor (1, 1a) of a motor or of a radial flow electromagnetic generator having at least one cylindrical support (2a) housing a plurality of single magnets (4), said at least one support (2a) including a cylindrical meshwork (5a) having meshes each delimiting a housing (5) for a respective single magnet (4), said meshwork (5a) being made of fibre-reinforced insulating material, each housing (5) having inner dimensions just sufficient to enable an introduction of a single magnet (4) therein, **characterised in that** a space is left between the housing (5) and the single magnet (4) by being filled by a fibre-reinforced resin, the rotor including a non-conductive composite layer coating the single magnets (4) and the meshwork (5a).

2. Rotor (1, 1a) according to the preceding claim, wherein said at least one meshwork (5a) is in the form of a honeycomb having housings (5) of hexagonal cross-section.

3. Rotor (1, 1a) according to any one of the two preceding claims, wherein each single magnet is in the form of an elongated stud (4) penetrating in length in the associated housing (5) thereof extending along the thickness of the magnet structure (5a), the elongated stud (4) being cylindrical or in the form of a polyhedron with at least one flat, longitudinal face (4b) and, when said at least one meshwork (5a) is in the form of a honeycomb, each stud (4) has a hexagonally-shaped longitudinal face (4b).

4. Rotor (1, 1a) according to any one of the preceding claims, wherein a ratio of a surface of the longitudinal face (4b) of the stud (4) over the surface of a face of the meshwork (5a) from where the housings (5) open out is less than 2%.

5. Rotor (1, 1a) according to any one of the preceding claims, wherein the meshwork (5a) has a longitudinal axis combined with the axis of rotation of the rotor (1, 1a), each stud (4) extending radially to the longitudinal axis of the meshwork (5a).

6. Rotor (1, 1a) according to the preceding claim, wherein the composite layer comprises reinforcement fibres like glass fibres or plastic material fibres.

7. Rotor (1, 1a) according to the preceding claim, wherein a single-layer or multilayer material is introduced in a space between the meshwork (5a) and the single magnet (4).

8. Motor or radial flow electromagnetic generator, **characterised in that** it comprises at least one rotor (1, 1a) according to any one of the preceding claims and at least one stator.

9. Motor or electromagnetic generator according to the preceding claim, which includes two stators and one rotor (1a), the cylindrically-shaped rotor (1a) having a cylindrical support (2a) having separating branches (3a) extending axially over the cylindrical support (2a), the separating branches (3a) axially delimiting the magnet structures (6) composed of the meshwork (5a) and of the single magnets (4).

10. Motor or electromagnetic generator according to any one of the two preceding claims, wherein a fret (9a) covers an end of the rotor (1a) in the proximity of the cylindrical support (2a), an inner covering cylinder (10) being inserted inside the cylindrical support (2a) and an outer covering cylinder (15) being inserted outside of the cylindrical support (2a) over the outer periphery of the cylindrical support (2a).

11. Motor or electromagnetic generator according to the preceding claim, wherein a first stator is disposed inside the rotor (1a) by having an inner magnetic circuit (12) carrying coils (11), the inner covering (10) covering the inner magnetic circuit (12) and a second stator is disposed outside of the rotor (1a) by surrounding it by having an outer magnetic circuit (14) integrating coils (13) therein, the outer covering (15) being disposed between the coils (13) and the outer magnetic circuit (14).

12. Method for manufacturing a rotor (1, 1a) according to any one of claims 1 to 7, **characterised in that** it comprises the following steps:
- positioning and maintaining single magnets (4) at a distance from one another by introducing each single magnet (4) in an associated respective housing (5) of a cylindrical meshwork (5a), by leaving a space between said housing (5) and said single magnet (4),
- gluing each single magnet (4) by introducing a fibre-reinforced resin in the space around the single magnet (4) in each housing (5),
- injecting a non-conductive composite layer around the meshwork (5a) and the single magnets (4) for the coating thereof.
